# EUROPEAN PATENT SPECIFICATION

(11) **EP 4 456 486 B1**
(45) Date of publication and mention of the grant of the patent: **23.04.2025**
(21) Application number: 23169743.4
(22) Date of filing: 25.04.2023
(51) Int. Cl.: H04L 12/18, H04W 4/06, H04W 76/40

(54) **METHOD FOR DISTRIBUTING DATA TO CLIENTS IN AN ITERATIVE DATA PROCESSING**
VERFAHREN ZUR DATENVERTEILUNG AN CLIENTS BEI EINER ITERATIVEN DATENVERARBEITUNG
PROCEDE DE DISTRIBUTION DE DONNEES A DES CLIENTS DANS UN TRAITEMENT ITERATIF DE DONNEES

(43) Date of publication of application: 30.10.2024
(73) Proprietor: NTT DOCOMO, INC., Tokyo 100-6150 (JP)
(72) Inventor: BAKHSHI, Bahador, 80687 Munich (DE); SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- WO-A1-2021/261611
- HU SHUYAN ET AL: "Distributed Machine Learning for Wireless Communication Networks: Techniques, Architectures, and Applications", IEEE COMMUNICATIONS SURVEYS & TUTORIALS, vol. 23, no. 3, 2 December 2020 (2020-12-02), pages 1458 - 1493, XP055909249, Retrieved from the Internet <URL:https://arxiv.org/pdf/2012.01489.pdf> DOI: 10.1109/COMST.2021.3086014

## Description

The present disclosure relates to methods for distributing data to clients in an iterative data processing.

In iterative data processing where data processing is distributed to multiple clients, such as for example federated learning, data needs to be distributed to the clients in each iteration. To avoid replicate transmissions over various interfaces in a communication system used for the data distribution (this may include internal core network interfaces as well as the core network - radio access network interface and the air interface), multicast may be used for the data transmission. However, depending on the data processing scheme, it may be desirable to not send the data to all clients that are registered for the data processing in each iteration, but to select a subset of the clients for each iteration to which the respective data is transmitted. This may for example be done for privacy but, e.g. in case of federated learning, better training results. So, it may be necessary to establish, for each iteration, a new multicast session for the respective subset. Since this leads to a high signalling overhead, more efficient approaches for distributing data to clients in an iterative data processing are desirable.

The publication WO 2021/261611 A1 describes federated learning and the usage of multicast for transmission of downlink traffic.

The publication Hu Shuyan et al. "Distributed Machine Learning for Wireless Communication Networks: Techniques, Architectures, and Applications", IEEE Communications Surveys & Tutorials, vol. 23, no. 3, 2 December 2020, pages 1458-1493 gives a survey of contemporary distributed machine learning techniques such as federated learning.

A method for distributing data to clients in an iterative data processing is provided including establishing a multicast session with a multiplicity of clients in a wireless communication system, wherein the multicast session is provided by means of one or more data replication components for replicating multicast data and, for each of multiple iterations of the iterative data processing, determining, by a server of the wireless communication system, a subset of the multiplicity of clients for the iteration, determining data to be distributed to the determined subset of clients, notifying the one or more data replication components about the determined subset, providing, by the server, the determined data to the one or more data replication components and controlling the one or more data replication components to replicate the data according to the determined subset and to transmit the determined data to each client of the determined subset within the multicast session.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 illustrates federated learning.
Figure 2 shows a radio communication system.
Figure 3 illustrates the MBS (Multicast/Broadcast Service) in 3GPP.
Figure 4 shows a flow diagram illustrating data distribution in an iterative data processing.
Figure 5 shows a flow diagram illustrating a federated learning (FL) procedure.
Figure 6 shows a flow diagram where a FL server indicates a FL client subset by means of a target UE (user equipment) list in user plane to replication components.
Figure 7 shows a flow diagram where a FL server indicates a FL client subset before transmitting multicast data to replication components.
Figure 8 illustrates the transmission of a target UE list in an extension header for the case of shared MBS traffic delivery.
Figure 9 illustrates the transmission of a target UE list in an extension header for the case of individual MBS traffic delivery.
Figure 10 illustrates the transmission of multicast data for the case of shared MBS traffic delivery in a control plane (CP) assisted case.
Figure 11 illustrates the transmission of multicast data for the case of individual MBS traffic delivery in the CP assisted case.
Figure 12 illustrates the transmission of multicast data for the case of shared MBS traffic delivery in a CP-UP (control plane - user plane) combined case.
Figure 13 illustrates the transmission of multicast data for the case of individual MBS traffic delivery in the CP-UP combined case.
Figure 14 illustrates a multicast of data.
Figure 15 shows a flow diagram illustrating a method for distributing data to clients in an iterative data processing.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in detail.

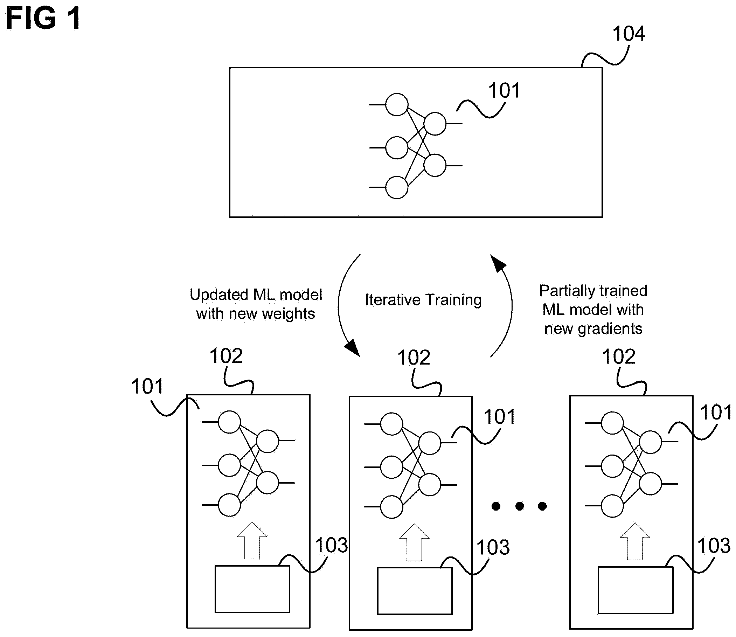

Figure 1 illustrates federated learning.

Federated learning (FL) is a decentralized machine learning (ML) technique that trains a ML model 101 (e.g. a deep neural network DNN) across multiple (FL) clients 102 using, for each client, a local training dataset 103 under the control of a central server (denoted as FL server) 104 (e.g. implemented by a 5G or 6G cloud).

It typically includes multiple training iterations, wherein in each training iteration (or training "cycle"),
- the FL server 104 chooses a number of clients 102 to participate in this iteration of the FL training
- the FL server 104 transmits a current version of the model 101 to a certain subset of the clients 102 (starting in the first iteration with an initial version of the model). It should be noted that the subsets may change from iteration to iteration. This is referred to as dynamic member selection.
- each FL client 102 of the respective subset (also denoted as FL node) trains the model 101 locally (i.e. updates the current version of the model, e.g. updates weights of a neural network). Each FL client of the respective subset 101 uses its own training data 103 (also denoted as local training data).
- the FL server 104 pools the training results from the clients 102 of the respective subset and generates a new version of the (global) ML model 101 via aggregating the results.

The resulting version (i.e. new version of the last iteration) of the ML model 101 may then be used by a model consumer such as the NWDAF(AnLF) (Network Data Analytics Function (Analytics Logical Function)) which may use it to make predictions from data obtained from an environment (such as communication resource need).

Dynamic member selection may be used to:
- mitigate client heterogeneity: clients in federated learning can have different characteristics, such as varying computing resources, network conditions, and data distributions. Dynamic client selection can help mitigate client heterogeneity by selecting clients that are most suitable for the current iteration based on their characteristics, thereby improving the efficiency and effectiveness of the training process.
- improve privacy: federated learning involves training models on data distributed across multiple clients. Dynamic client selection can help improve privacy by selecting clients that have data that is less sensitive or has been more heavily randomized, reducing the risk of exposing sensitive information.
- reduce communication overhead: in federated learning, communication overhead between the clients and the central server can be a bottleneck. Dynamic client selection can help reduce communication overhead by selecting a subset of clients that are most relevant for the current iteration, thereby reducing the amount of data that needs to be transmitted.
- increase convergence speed: dynamic client selection can also help increase the convergence speed of the federated learning process by selecting clients with the highest quality data or those that are most likely to improve the global model based on their local updates.

With regard to realization in the framework of a 5G communication network, the FL server 104 may be an application function and the clients 102 are applications in UEs (User Equipments).

Federated Learning is a decentralized application such that there is considerable communication between the FL server 104 and the FL clients 102. Accordingly, communication efficiency specifically in the case of a large number of clients is desirable. It should be noted that in each iteration (e.g., cycle of FL training) the same data (i.e., the current version of the (global version of the) ML model 101) is distributed from the server 104 to multiple clients 101, i.e. there may be redundant data transmission over the respective communication network that is used for the FL data transmission. In the following, a FL is assumed which uses dynamic member selection, i.e. the FL server 104 selects a subset of the clients 102 for each iteration (i.e. there is a "dynamic selection" of clients).

For transmitting the same data to multiple devices, communication networks typically have a multicast functionality.

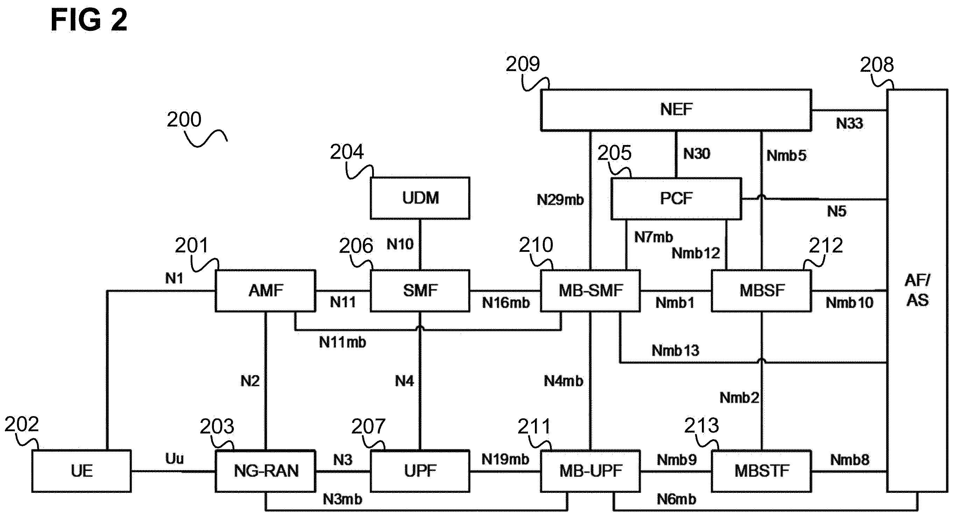

Figure 2 shows a radio communication system 200, in this example configured according to 5G (Fifth Generation) as specified by 3GPP (Third Generation Partnership Project), with respect to multicast, in particular the various interfaces involved.

The radio communication system 200 includes a mobile radio terminal device 202 such as a UE (user equipment), a nano equipment (NE), and the like. The mobile radio terminal device 202, also referred to as subscriber terminal, forms the terminal side while the other components of the radio communication system 200 described in the following are part of the mobile radio communication network side, i.e. part of a mobile radio communication network (e.g. a Public Land Mobile Network PLMN).

Furthermore, the radio communication system 200 includes a radio access network 203, which may include a plurality of radio access network nodes, i.e. base stations configured to provide radio access in accordance with a 5G (Fifth Generation) radio access technology (5G New Radio). It should be noted that the radio communication system 200 may also be configured in accordance with LTE (Long Term Evolution) or another mobile radio communication standard but 5G is herein used as an example. Each radio access network node may provide a radio communication with the mobile radio terminal device 202 over an air interface. It should be noted that the radio access network 203 may include any number of radio access network nodes.

The radio communication system 200 further includes a core network (CN, here 5GC) including an Access and Mobility Management Function (AMF) 201 connected to the RAN 203 and a Unified Data Management (UDM) 204. Here and in the following examples, the UDM may further consist of the actual UE's subscription database, which is known as, for example, the UDR (Unified Data Repository). The core network one or more PCFs (Policy Control Functions) 205.

The core network further includes a Session Management Function (SMF) 206 and multiple a User Plane Functions (UPF) 207. The SMF 206 is for handling PDU (Protocol Data Unit) sessions, i.e. for creating, updating and removing PDU sessions and managing session context with the User Plane Function (UPF).

The core network further includes an application function (AF) 208 (or application server AS). The AF 208 is connected to other core network components such as the PCF 205 via an NEF (Network Exposure Function), in particular in case the AF 208 is maintained by a third party (i.e. a party other than the operator of the mobile radio communication system 200).

To support the 3GPP MBS (Multicast/Broadcast Service), there are MB (Multicast Broadcast) versions of the SMF 206 and the UPF 207: an MB-SMF 210 and an MB-UPF 211, respectively. Further, the communication system includes an MBSF 212 (Multicast/Broadcast Service Function) and MBSTF 213 (MBSTF Multicast/Broadcast Service Transport Function.).

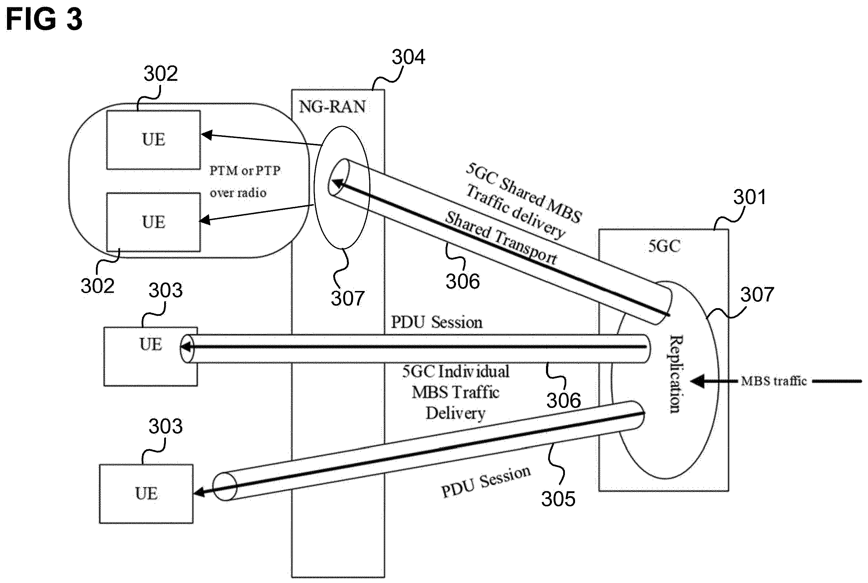

Figure 3 illustrates the MBS in 3GPP.

MBS data (i.e. "traffic"), e.g. from the FL 104, is received by the communication system's core network 301. The MBS data should be transmitted to a plurality of UEs 302, 303 via the communication system's radio access network (RAN) 304. The core network 301 may use separate PDU sessions 305 for multiple UEs 203 or may use a shared transport 306 to each base station of the RAN 304 for multiple UEs 302 (served by the base station to which the base station then transmits the data using radio point-to-point or radio point-to-multipoint transmission). These two options are referred to transmission via 5GC individual MBS traffic delivery and transmission via 5GC shared MBS traffic delivery, respectively. In any case (since it can be assumed that not all clients 302 are served by the same base station), there is a data replication 307 at one or more points in the communication system, i.e. the communication system includes are one or more data replication components which replicate the data such that there is a version of the data for each UE (or at least each for each base station (or radio cell): within a radio cell, it is possible that data is only transmitted once to multiple UEs).

In context of a multicast functionality such as 3GPP's MBS, there are typically the following concepts:
- Multicast Subscription Group: a group of UEs (e.g. respective users) who are subscribed to a certain multicast service (e.g. MBS in multicast mode) and therefore authorized to join a multicast group and receive data associated with this multicast group via the multicast service.
- Multicast group: multicast subscription group members may join a multicast group (associated with the multicast subscription group). It is a group of users that have an activated multicast service (of a MBS in multicast mode) and therefore are receiving data transmitted by the multicast service. So, once a UE is subscribed to a multicast service, it can be assigned to a multicast group, which is the group of UEs that will receive the same multicast data stream. The multicast group is identified by a multicast address, and the multicast data is sent to this address by the sender.
- Multicast session: a continuous and time-bounded reception of multicast service data by the UE. Each UE in a multicast group receives data in the corresponding multicast session

It should be noted that in the following examples, Federated Learning is used as use case but embodiments may also be applied to other applications that iteratively transfer the same data to a dynamic group of UEs, i.e. for other types of iterative data processing (such as distributed graph processing or MapReduce applications).

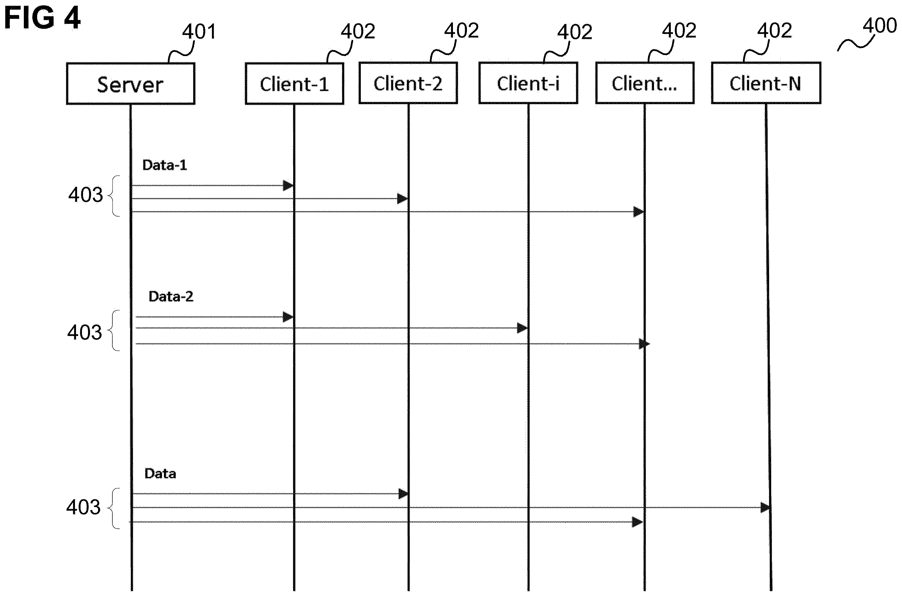

Figure 4 shows a flow diagram 400 illustrating traffic in a more general application example.

A server 401 and multiple clients 402 (numbered 1 to N) are involved in the flow.

In each iteration 403, the same data (e.g. in case of FL the current version of Global Model (GM-i)) is sent from 401 server to (a subset of) the clients (where i is the iteration index). So, in each iteration data can be multicast.

In each iteration 403, a subset of the clients 402 needs to receive the data. According to various embodiments, there is therefore a target client (e.g. target UE) filtering in each iteration 403 in the multicasting (e.g. a filtering of UEs in a multicast group which contains all the clients 102).

The overall data transmission is not a multimedia stream but includes periodic data transmissions if the size of data in all iterations is the same, i.e. size(GM-i) = size(GM-j). So, the data volume (per iteration) can be shared with 5GC to derive QoS (Quality of Service) parameters like Maximum Data Burst Volume.

In the following, embodiments will be described in context of federated learning.

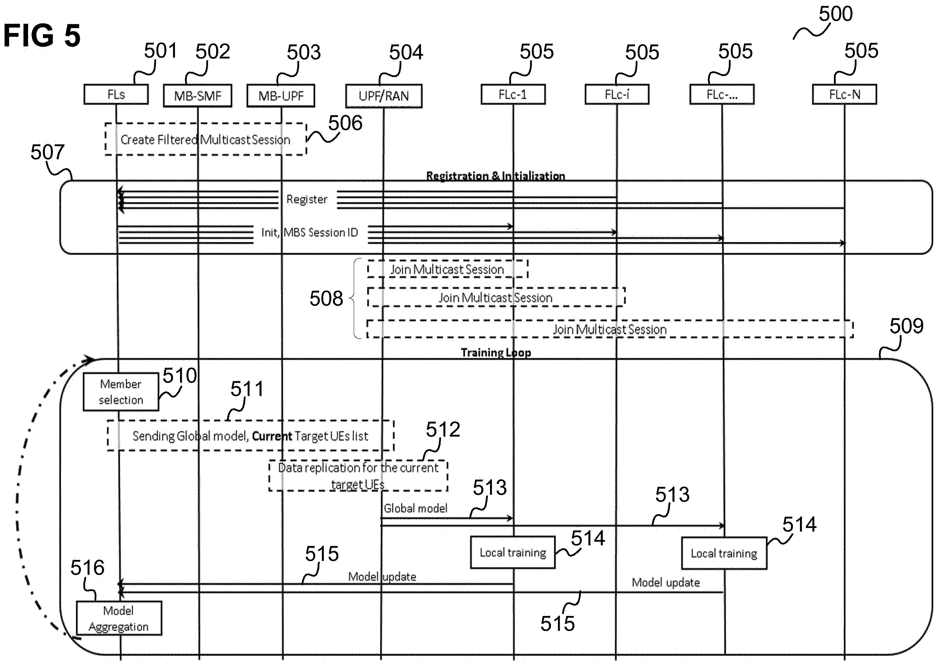

Figure 5 shows a flow diagram 500 illustrating an FL procedure, in particular with respect to data transmission using multicast via a filtering mechanism provided according to various embodiments.

An FL server 501 (e.g. corresponding to FL server 104) and FL clients 505 (e.g. UEs, numbered 1 to N, e.g. corresponding to FL clients 102) are involved in the flow. Communication between the FL server 501 and the FL clients 505 is performed, in this example, via a 5G communication system, in particular an MF-SMF 502, an MB-UPF 503 and a data replication component 504 which may be a UPF, an MB-UPF or a RAN (see figure 2 as well as figure 3 which illustrates the two options where data replication takes place).

As mentioned above, according to various embodiments, data is filtered in a multicast session, i.e. in each training iteration, data is transmitted to the client subset selected (or defined) for that training iteration. Accordingly, in 506, the FL server 501 establishes a "filtered" multicast session (i.e. a multicast session which has this filtering feature) by means of the communication system's core network.

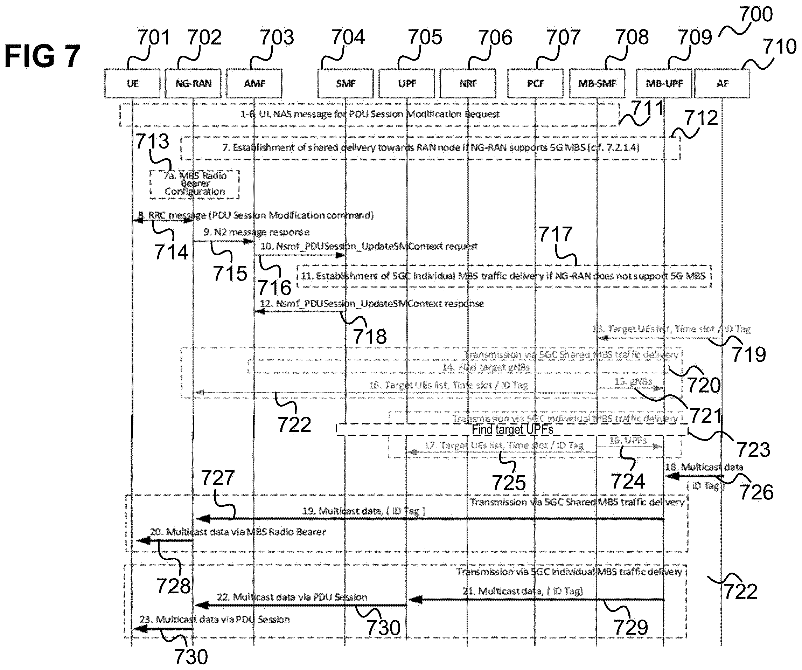

The Filtered Multicast Indicator (i.e. an indicator which indicates that the multicast session is a filtered multicast session) may for example be included in the Nmbsmf_MBSSession_CreateRequest message sent from NEF or MBSF to MB-SMF (e.g. according to 3GPP TS 23.247 version 17.3.0 Release 17 clause 7.1.1.2, Figure 7.1.1.2-1). The data volume of periodic traffic (i.e. size of data for the global model) may be defined as part of the MBS service information in the Nmbsmf_MBSSession_CreateRequest message.

In 507, the FL clients 505 register with the FL server 501 (for participation in the training) and the FL server 501 initializes the FL clients 505 for the training, including informing them about the identification of the multicast session (in this example an MBS Session ID). In 508, the FL clients 505 join the multicast session.

The training loop is then performed, which includes, in each iteration 509
- member selection (i.e. FL client subset selection) by the FL server 501 in 510
- transmission (initiated by the FL server 501 in 511) of the global ML model to the FL clients of the selected subset via the core network
   o this includes data replication in 512 by MB-UPF, UPF or RAN and sending the corresponding data (e.g. neural network weights) to the clients 505 of the selected subset in 513
- local training in each FL client 505 of the subset in 514
- transmission of model updates of the FL client 505 of the subset in 515
- aggregation of the model updates to a new (updated) version of the (global) ML model in 516.

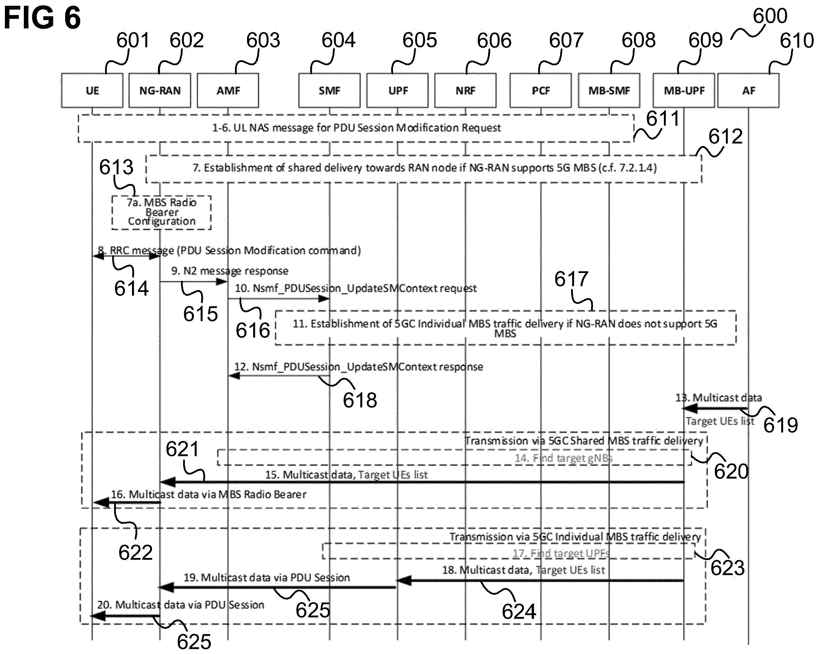

The FL server 501 (corresponding to an AF 208) may share, in each iteration, a list of UEs of the respective FL client subset (i.e. list of target UEs) with the replicating entities (i.e. replication components), e.g. MB-UPF, UP, RAN (specifically base stations, e.g. gNBs) either before or while transmitting the multicast data (i.e. for example in or before the steps of multicast data transmission in TS 23.247, clause 7.2.1.3, Figure 7.2.1.3-1, see figure 6 steps 619, 621 and 624).

Figure 6 shows a flow diagram 600 where the FL server indicates the FL client subset by means of a target UE list in user plane to the replication components (found by control plane signalling).

A UE 601 (representing the FL clients), a RAN 602, an AMF 603, an SMF 604, a UPF 605, an NRF 606, a PCF 607, an MB-SMF 608, and MB-UPF 609 and an AF 610 (corresponding to the FL server) are involved in the flow.

In 611 to 618, UE 601 joins a multicast session.

In 619, the AF 610 provides multicast data (e.g. the specification of a current version of the ML model to be trained). With the multicast data, the AF 610 provides a target UE list (i.e. a list of UEs corresponding to the FL clients selected for the current iteration).

As explained with reference to figure 3, there are two options:
1) transmission via 5GC shared MBS traffic delivery
2) transmission via 5GC individual MBS traffic delivery

In the first option, in 620, the core network control plane determines the target base stations (i.e. the base stations serving the target UEs). In 621, the MB-UPF 609 transmits the multicast data as well as the target UE list to the determined base stations of the RAN 602 which transmit the data to each target UE 601 (e.g. using an MBS Radio Bearer) in 622.

In the second option, in 623, the core network control plane determines the target UPFs (i.e. the UPFs serving the target UEs). In 624, the MB-UPF 609 transmits the multicast data as well as the target UE list to the determined UPFs which transmit the data via the RAN 602 to each target UE 601 in 625 using a PDU session per UE 601.

Figure 7 shows a flow diagram 700 where the FL server indicates the FL client subset before transmitting the multicast data to the replication components (via control plane signalling). The multicast data is associated to the list either implicitly via a time slot in which it is sent (which is associated with the list) or explicitly via a ID tag (which is associated with the list) included in the user plane transmission (i.e. together with the multicast data).

As in figure 6, a UE 701 (representing the FL clients), a RAN 702, an AMF 703, an SMF 704, a UPF 705, an NRF 706, a PCF 707, an MB-SMF 708, and MB-UPF 709 and an AF 710 (corresponding to the FL server) are involved in the flow.

In 711 to 718, UE 701 joins a multicast session.

In 719, the AF 710 transmits the target UE list for the current iteration as well as the indication of a time slot or ID tag associated with the target UE list to the MB-SMF 708.

Like in figure 6, there is a distinction of the two options:
1) transmission via 5GC shared MBS traffic delivery
2) transmission via 5GC individual MBS traffic delivery

For the first option, in 720, the core network control plane determines the target base stations (i.e. the base stations serving the target UEs). The MB-SMF 701 then informs the MB-UPF about the target base stations in 721 and transmits the target UE list and the associated time slot or ID tag, respectively, to the target base stations in 722.

For the second option, in 723, the core network control plane determines the target UPFs (i.e. the UPFs serving the target UEs). The MB-SMF 701 then informs the MB-UPF about the target UPFs in 724 and transmits the target UE list and the associated time slot or ID tag, respectively, to the target UPFs in 725.

In 726, the AF 710 provides multicast data (e.g. the specification of a current version of the ML model to be trained). The AF 710 does this in a certain time slot associated with the target UE list or provides, with the multicast data, the ID tag of the target UE list (the latter case is illustrated in figure 7).

For the first option, in 727, the MB-UPF 709 forwards the multicast data to the target base stations (possibly indicating the ID tag of the target UE list) which transmit the data to each target UE 701 (e.g. using an MBS Radio Bearer) in 728.

In the second option, in 729, the MB-UPF 709 forwards the multicast data to the target UPFs (possibly indicating the ID tag of the target UE list) which transmit the data via the RAN 702 to each target UE 701 in 730 using a PDU session per UE 701.

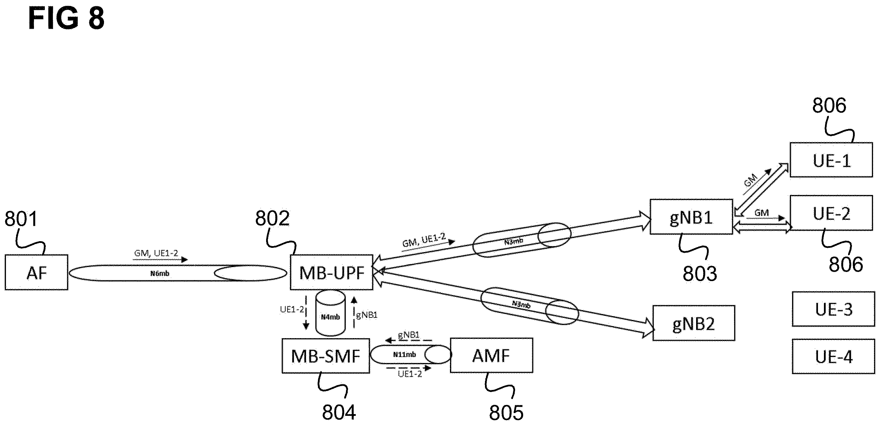

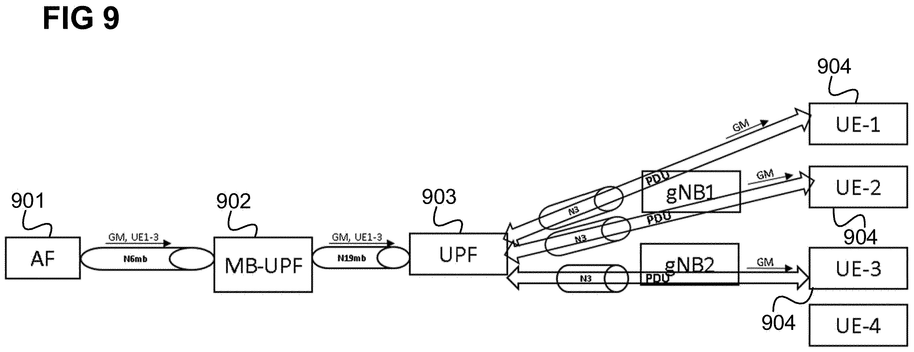

In the following, examples for the transmission of the target UE list (as in the example of figure 6) are described with reference to figures 8 and 9 for the two possible options mentioned above.

Figure 8 illustrates the transmission of the target UE list in an extension header (e.g. of GTP-U or IPv6) from the AF 801 via the MB-UPF 802 to the target base station 803 serving the target UEs 806 ("UE-1" and "UE-2" in this example) for the case of shared MBS traffic delivery (option 1 above).

The MB-UPF 802 may determine the target base station 803 by consulting the MB-SMF 804 which in turn may consult the AMF 805.

Figure 9 illustrates the transmission of the target UE list in an extension header (e.g. of GTP-U or IPv6) from the AF 901 via the MB-UPF 902 to the target UPF 903 serving the target UEs 904 ("UE-1", "UE-2" and "UE-3" in this example) for the case of individual MBS traffic delivery (option 2 above).

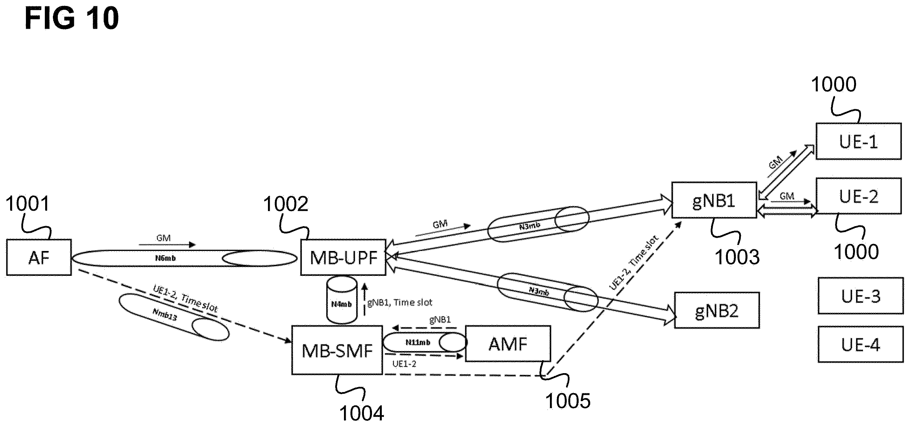

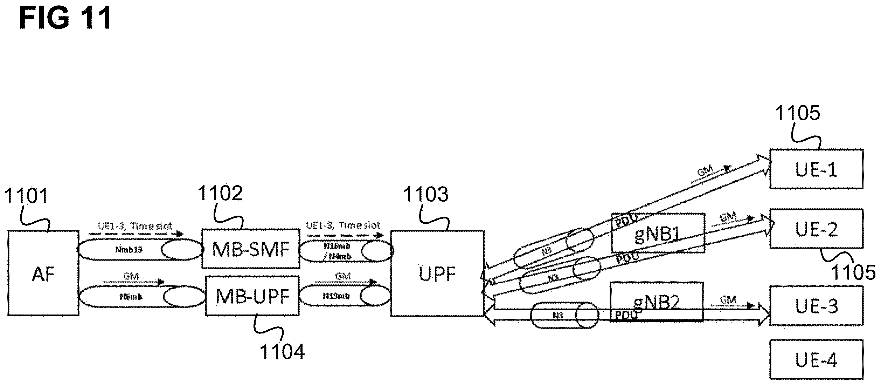

In the following, examples for the usage of a time slot to specify the target UEs (see description of figure 7), also referred to as "CP assisted" case, are described with reference to figures 10 and 11 for the two possible options mentioned above.

Figure 10 illustrates the transmission of multicast data for the case of shared MBS traffic delivery in the CP assisted case.

The AF 1001 first transmits (via control plane) the information to the MB-SMF 1004 that a certain set of UEs ("UE-1" and "UE-2" in this example), is associated with a certain time slot. The time slot implicitly thus associates multicast data (that is sent in the time slot) with the target UE list.

After this has been done, the AF 1001 may transmit multicast data in the respective time slot to the MB-UPF 1002. The MB-UPF 1002 is informed about the target base station 1003 by the MB-SMF 1004 which determines (for the time slot) the target UE list and consults the AMF 1005 for the target base station 1003. The MB-UPF 1002 may then send the multicast data to the target base station 1003 serving the target UEs 1006 during the given time slot. The MB-SMF 1004 may also inform the RAN about the association of target UEs 1006 with the time slot. It should be noted that the complete control plane signalling (shown hatched) may be completed before the user plane signalling (i.e. the transmission of multicast data).

Figure 11 illustrates the transmission of multicast data for the case of individual MBS traffic delivery in the CP assisted case.

The AF 1101 first transmits (via control plane) the information via the MB-SMF 1102 to each target UPF 1103 that a certain set of UEs 1105 ("UE-1", "UE-2" and "UE-3" in this example) served by the UPF is associated with a certain time slot. The time slot implicitly thus associates multicast data (that is sent in the time slot) with the target UEs served by that UPF 1103.

After this has been done, the AF 1101 may transmit multicast data in the respective time slot to the MB-UPF 1104 which forwards it to each target UPF 1103. The target UPF 1103 then transmits the multicast data to the target UEs 1105 (using individual PDF sessions) during the time slot. Again, it should be noted that the complete control plane signalling (shown hatched) may be completed before the user plane signalling (i.e. the transmission of multicast data).

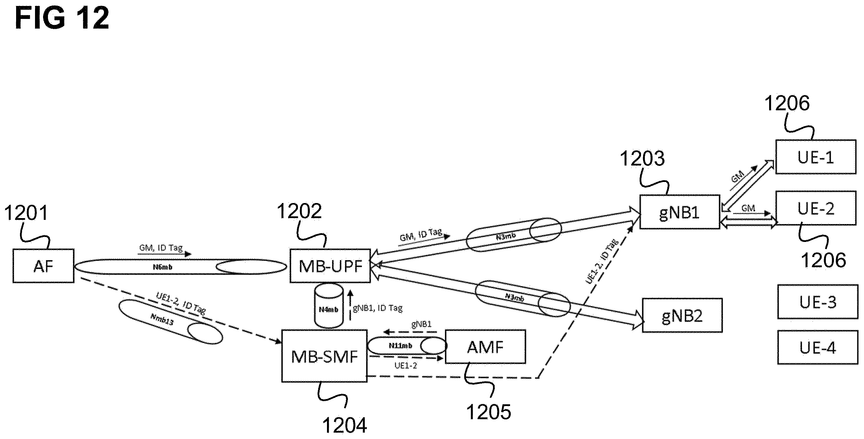

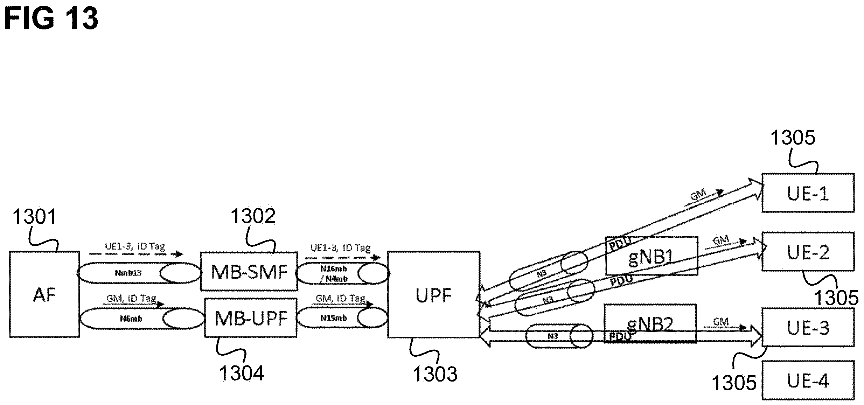

In the following, examples for the usage of an ID tag to specify the target UEs (see description of figure 7), also referred to as "CP-UP combined" case, are described with reference to figures 12 and 13 for the two possible options mentioned above.

Figure 12 illustrates the transmission of multicast data for the case of shared MBS traffic delivery in the CP-UP combined case.

The AF 1201 first transmits (via control plane) the information to the MB-SMF 1004 that a certain set of UEs ("UE-1" and "UE-2" in this example), is associated with a ID tag.

After this has been done, the AF 1001 may transmit multicast data including the tag ID to the MB-UPF 1202. The tag ID is for example carried in the extension header (GTP-U, IPv4, IPv6) of the multicast data and explicitly associates multicast data with the target UE list. The MB-UPF 1202 is informed about the target base station 1003 by the MB-SMF 1204 which determines (from the tag ID) the target UE list and consults the AMF 1205 for the target base station 1203. The MB-UPF 1202 may then send the multicast data to the target base station 1203 serving the target UEs 1206. The MB-SMF 1204 may also inform the RAN about the association of target UEs 1206 with the tag ID. It should be noted that the complete control plane signalling (shown hatched) may be completed before the user plane signalling (i.e. the transmission of multicast data).

Figure 13 illustrates the transmission of multicast data for the case of individual MBS traffic delivery in the CP-UP combined case.

The AF 1301 first transmits (via control plane) the information via the MB-SMF 1302 to each target UPF 1303 that a certain set of UEs 1305 ("UE-1", "UE-2" and "UE-3" in this example) served by the UPF is associated with a certain ID tag.

After this has been done, the AF 1301 may transmit multicast data including the tag ID to the MB-UPF 1304 which forwards it to each target UPF 1303. The tag ID is for example carried in the extension header (GTP-U, IPv4, IPv6) of the multicast data and explicitly associates multicast data with the target UE list. The target UPF 1303 then transmits the multicast data to the target UEs 1305 (using individual PDF sessions). Again, it should be noted that the complete control plane signalling (shown hatched) may be completed before the user plane signalling (i.e. the transmission of multicast data).

For communication between MB-UPF and MB-SMF, the N4 (specifically the N4mb interface) may be extended by a PFCP message type to query location of a UE (to determine its serving base station).

Regarding the communication between AF and MB-SMF (in particular to specify the current selected subset), an MB-SMF service extension may be introduced, e.g. the Nmbsmf_MBSSession_ContextUpdate message may be extended such that it allows to . pause or resume of multicast data reception.

Further, the N4 (specifically the N4mb interface) may be extended with an extension to update the FAR IE (Forwarding Action Rule Information Element) within the PFCP Session Modification Request to include only the current target UE list.

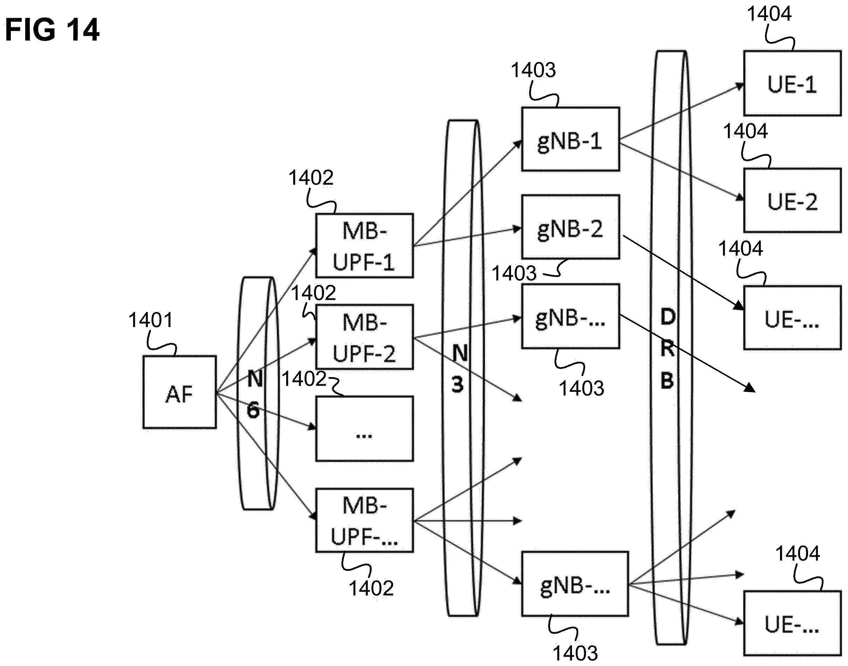

Figure 14 illustrates a multicast of data from an AF 1401 via MB-UPFs 1402 and base stations 1403 to UEs 1404.

Accordingly, the multicast data travels over the N6 (specifically N6mb) interface and the N3 (specifically N3mb interface) as well as over dedicated radio bearers.

The approaches described herein allow using a multicast session to distribute global model from FL server to FL clients such that the number of transmissions of multiple replicas of the global model from AF to the core network (e.g. 5GC) is reduced. This includes transmission and resource consumption efficiency (e.g. in terms of number of packets) on the N6 interface and on the N3 interface if the shared MBS traffic delivery is deployed.

The usage of target UE list for the multicast data eliminates unnecessary replication of data for the clients that have not been selected for this iteration of FL training, thus including transmission and resource consumption efficiency and eliminating MBS session creation and join procedure per FL cycle (thus increasing signalling efficiency).

The transmission and resource consumption efficiency that can be achieved is especially high if a small number of (MB-)UPFs and base stations server the selected clients, UEs do not handover during an iteration.

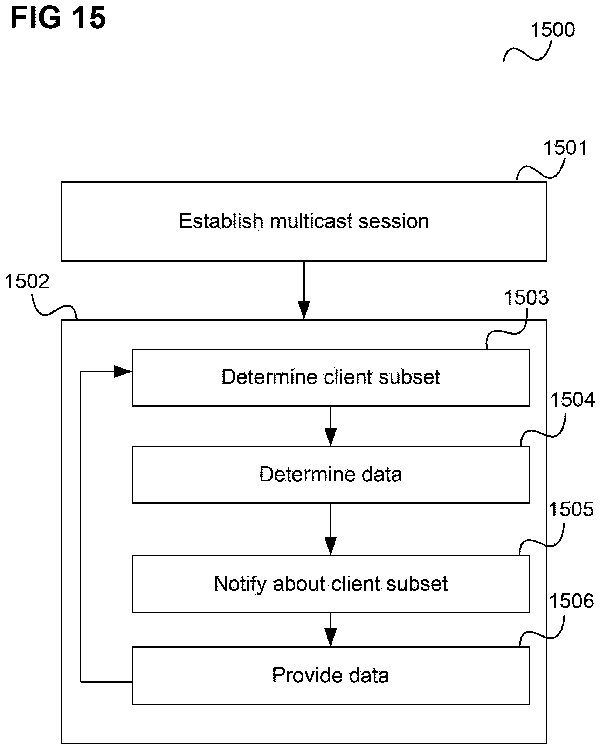

In summary, according to various embodiments, a method is provided as illustrated in figure 15.

Figure 15 shows a flow diagram 1500 illustrating a method for distributing data to clients in an iterative data processing.

In 1501, a multicast session (also denoted as "filtered" multicast session) with a multiplicity of clients is established, wherein the multicast session is provided by means of one or more data replication components for replicating multicast data.

In 1502, for each of multiple iterations of the iterative data processing,
- a subset of the multiplicity of clients (which may be different from the subset in other iterations) is determined for the iteration in 1503
- data to be distributed to the determined subset of clients is determined 1504
- the one or more data replication components are notified about the determined subset 1505 and
- the determined data is provided to the one or more data replication components and the one or more data replication components are controlled to replicate the data according to the determined subset and to transmit the determined data to each client of the determined subset within the multicast session in 1506.

It should be noted that the steps of figure 15 do not necessarily be performed in the illustrated order (e.g. the one or more data replication components are notified about the determined subset before the data is determined or the data may be determined before the subset is determined).

According to various embodiments, in other words, an approach (on architectural level) for efficiently distributing (exchanging) data to clients is provided. This is achieved by using the same multicast session (over multiple iterations, i.e. avoiding establishing a multicast session for each determined subset of clients) but controlling, within the multicast session, the subset of clients to which data is sent. So, the data is sent for multiple operations within the same multicast context. In other words, each iteration has an associated (determined) data set to be sent in the iteration and the data sets of multiple iterations are sent within the same multicast session (i.e. the same multicast (session) context).

The clients may for example correspond to mobile terminals in a mobile communication system (e.g. each client may correspond to a respective mobile terminal).

Transmitting the data within the same multicast context (i.e. keeping the multicast context over multiple iterations) may for example include
- Transmitting, for all of the multiple iterations, the respective data using the same session ID, the same type of devices involved, the same protocol being used, and/or any other relevant details specific to the multicast session
- The server transmitting the data for all of the multiple iterations including the same multicast group address and port number in the header of the data packets by which it transmits the data.
- The clients join only one time to the multicast session identified by a unique ID announced by the server. A list of clients per session is maintained by the network where, for each iteration, replication entities (i.e. replication components) are instructed accordingly to replicate packets for the clients in the group of the determined subset. Packets sent by the server to the network associated with the unique ID are replicated inside the network and are received by all the clients of the determined subset joined to the session.

It should be noted that at least for some iterations, the subset changes from iteration to iteration. The size of data may be the same for all iterations.

As described above, the one or more data replication components may be notify about the respective subset via id tag, time slot, control plane or user plane, i.e. the data replicating entities may be instructed to apply target client (e.g. UE) list filtering by
- Sending the list simultaneously with the multicast data via extension headers of user plane protocols
- Configuring the data replicating entities to apply the target UEs list filtering for a given timeslot before sending the multicast data via extensions of control plane protocols and/or services
- Sending the target UEs list with an ID tag to the data replicating entities via extensions of control plane protocols/services and embedding the ID tag in the extension headers of the user plane protocols.

According to various embodiments, a communication system arrangement (e.g. a server or server system) is provided configured to perform the method of figure 15.

The communication system arrangement includes components such as one or more communication interfaces (e.g. for communication with core network components, radio access network components and/or mobile terminals), one or more processors and memories.

The components of the communication system arrangement may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made as long as they fall within the scope of protection of the claims.

## Claims

1. A method for distributing data to clients (402, 505) in an iterative data processing, comprising:
establishing (1501) a multicast session with a multiplicity of clients (402, 505) in a radio communication system (200), wherein the multicast session is provided by means of one or more data replication components for replicating multicast data; and
for each of multiple iterations of the iterative data processing,
determining (1503), by a server (401, 501) of the radio communication system (200), a subset of the multiplicity of clients (402, 505) for the iteration;
determining (1504) data to be distributed to the determined subset of clients (402, 505);
notifying (1505) the one or more data replication components about the determined subset; and
providing (1506), by the server (401, 501), the determined data to the one or more data replication components and controlling the one or more data replication components to replicate the data according to the determined subset and to transmit the determined data to each client (402, 505) of the determined subset within the multicast session.

2. The method of claim 1, further comprising, in each iteration, processing the determined data by each client (402, 505) of the determined subset.

3. The method of claim 1 or 2, further comprising, in each iteration, the server (401, 501) receiving a processing result of the determined data from each client (402, 505) of the determined subset.

4. The method of claim 3, further comprising the server (401, 501) merging the processing results.

5. The method of any one of claims 1 to 4, wherein the iterative data processing is federated learning and, in each iteration, the determined data is a specification of a current version of a machine learning model for the iteration.

6. The method of any one of claims 1 to 5, wherein the one or more data replication components comprise one or more radio access network components and/or one or more core network components of the radio communication system (200).

7. The method of any one of claims 1 to 6, wherein the one or more data replication components comprise one or more base stations and/or one or more user plane (503) functions.

8. The method of any one of claims 1 to 7, wherein the one or more data replication components comprise one or more Multicast Broadcast User Plane Functions (503).

9. The method of any one of claims 1 to 8, comprising associating the determined subset with a time slot of a sequence of time slots, notifying the one or more data replication components about the association and notifying the one or more data replication components about the determined subset by transmitting the determined data to the one or more data replication components in the time slot.

10. The method of claim 9, comprising notifying the one or more data replication components about the association of the determined subset with the time slot on control plane.

11. The method of any one of claims 1 to 8, comprising associating the determined subset with a subset identification, notifying the one or more data replication components about the association and notifying the one or more data replication components about the determined subset by transmitting the subset identification to the one or more data replication components.

12. The method of claim 11, comprising notifying the one or more data replication components about the association of the determined subset with the subset identification on control plane.

13. The method of claim 11 or 12, comprising notifying the one or more data replication components about the determined subset by transmitting the subset identification together with the determined data to the one or more data replication components.

14. A radio communication system (200) configured to perform the method of any one of claims 1 to 13.

## Patentansprüche

1. Ein Verfahren zum Verteilen von Daten an Clients (402, 505) in einer iterativen Datenverarbeitung, aufweisend:
Aufbauen (1501) einer Multicast-Sitzung mit einer Mehrzahl von Clients (402, 505) in einem Funk-Kommunikationssystem (200), wobei die Multicast-Sitzung mittels einer oder mehrerer Datenreplikationskomponenten zum Replizieren von Multicast-Daten bereitgestellt wird; und
für jede von mehreren Iterationen der iterativen Datenverarbeitung
Bestimmen (1503) einer Teilmenge der Mehrzahl von Clients (402, 505) für die Iteration durch einen Server (401, 501) des Funk-Kommunikationssystems (200);
Bestimmen (1504) von Daten, die an die bestimmte Teilmenge von Clients (402, 505) verteilt werden sollen;
Benachrichtigen (1505) der einen oder mehreren Datenreplikationskomponenten über die bestimmte Teilmenge; und
Bereitstellen (1506) der ermittelten Daten durch den Server (401, 501) für die eine oder mehreren Datenreplikationskomponenten und Steuern der einen oder mehreren Datenreplikationskomponenten, um die Daten gemäß der ermittelten Teilmenge zu replizieren und die ermittelten Daten an jeden Client (402, 505) der ermittelten Teilmenge innerhalb der Multicast-Sitzung zu übertragen.

2. Das Verfahren nach Anspruch 1, das ferner in jeder Iteration die Verarbeitung der bestimmten Daten durch jeden Client (402, 505) der bestimmten Teilmenge aufweist.

3. Das Verfahren nach Anspruch 1 oder 2, das ferner in jeder Iteration aufweist, dass der Server (401, 501) ein Verarbeitungsergebnis der bestimmten Daten von jedem Client (402, 505) der bestimmten Teilmenge empfängt.

4. Das Verfahren nach Anspruch 3, wobei der Server (401, 501) ferner die Verarbeitungsergebnisse zusammenführt.

5. Das Verfahren nach einem der Ansprüche 1 bis 4, wobei die iterative Datenverarbeitung ein föderiertes Lernen ist und die ermittelten Daten bei jeder Iteration eine Spezifikation einer aktuellen Version eines maschinellen Lernmodells für die Iteration sind.

6. Das Verfahren nach einem der Ansprüche 1 bis 5, wobei die eine oder mehreren Datenreplikationskomponenten eine oder mehrere Funkzugangsnetzkomponenten und/oder eine oder mehrere Kernnetzkomponenten des Funk-Kommunikationssystems (200) aufweisen.

7. Das Verfahren nach einem der Ansprüche 1 bis 6, wobei die eine oder mehreren Datenreplikationskomponenten eine oder mehrere Basisstationen und/oder eine oder mehrere Benutzerebenen-Funktionen (503) aufweisen.

8. Das Verfahren nach einem der Ansprüche 1 bis 7, wobei die eine oder mehreren Datenreplikationskomponenten eine oder mehrere Multicast-Broadcast-Benutzerebenen-Funktionen (503) aufweisen.

9. Das Verfahren nach einem der Ansprüche 1 bis 8, das das Zuordnen der bestimmten Teilmenge zu einem Zeitschlitz einer Folge von Zeitschlitzen, das Benachrichtigen der einen oder mehreren Datenreplikationskomponenten über die Zuordnung und das Benachrichtigen der einen oder mehreren Datenreplikationskomponenten über die bestimmte Teilmenge durch Übertragen der bestimmten Daten zu der einen oder den mehreren Datenreplikationskomponenten in dem Zeitschlitz aufweist.

10. Das Verfahren nach Anspruch 9, das die Benachrichtigung der einen oder mehreren Datenreplikationskomponenten über die Zuordnung der ermittelten Teilmenge zu dem Zeitfenster auf der Steuerungsebene aufweist.

11. Das Verfahren nach einem der Ansprüche 1 bis 8, das das Zuordnen der bestimmten Teilmenge zu einer Teilmengenidentifikation, das Benachrichtigen der einen oder mehreren Datenreplikationskomponenten über die Zuordnung und das Benachrichtigen der einen oder mehreren Datenreplikationskomponenten über die bestimmte Teilmenge durch Übertragen der Teilmengenidentifikation an die eine oder mehreren Datenreplikationskomponenten aufweist.

12. Das Verfahren nach Anspruch 11, das das Benachrichtigen der einen oder mehreren Datenreplikationskomponenten über die Zuordnung der ermittelten Teilmenge mit der Teilmengenidentifikation auf der Steuerungsebene aufweist.

13. Das Verfahren nach Anspruch 11 oder 12, das das Benachrichtigen der einen oder mehreren Datenreplikationskomponenten über die bestimmte Teilmenge durch Übertragung der Teilmengenidentifikation zusammen mit den bestimmten Daten an die eine oder mehreren Datenreplikationskomponenten aufweist.

14. Ein Funk-Kommunikationssystem, das so konfiguriert ist, dass es das Verfahren nach einem der Ansprüche 1 bis 13 ausführt.

## Revendications

1. Procédé de distribution de données à des clients (402, 505) dans un traitement de données itératif, comprenant :
l'établissement (1501) d'une session de multidiffusion avec une multiplicité de clients (402, 505) dans un système de communication radio (200), dans lequel la session de multidiffusion est fournie au moyen d'un ou de plusieurs composants de réplication de données pour répliquer des données de multidiffusion ; et
pour chacune de multiples itérations du traitement de données itératif,
la détermination (1503), par un serveur (401, 501) du système de communication radio (200), d'un sous-ensemble de la multiplicité de clients (402, 505) pour l'itération ;
la détermination (1504) de données à distribuer au sous-ensemble déterminé de clients (402, 505) ;
la notification (1505) audit un ou auxdits plusieurs composants de réplication de données du sous-ensemble déterminé ; et
la fourniture (1506), par le serveur (401, 501), des données déterminées audit un ou auxdits plusieurs composants de réplication de données et la commande dudit un ou desdits plusieurs composants de réplication de données pour répliquer les données selon le sous-ensemble déterminé et transmettre les données déterminées à chaque client (402, 505) du sous-ensemble déterminé au sein de la session de multidiffusion.

2. Procédé selon la revendication 1, comprenant en outre, à chaque itération, le traitement des données déterminées par chaque client (402, 505) du sous-ensemble déterminé.

3. Procédé selon la revendication 1 ou 2, comprenant en outre, à chaque itération, la réception par le serveur (401, 501) d'un résultat de traitement des données déterminées provenant de chaque client (402, 505) du sous-ensemble déterminé.

4. Procédé selon la revendication 3, comprenant en outre la fusion des résultats de traitement par le serveur (401, 501).

5. Procédé selon l'une quelconque des revendications 1 à 4, dans lequel le traitement de données itératif est un apprentissage fédéré et, à chaque itération, les données déterminées sont une spécification d'une version actuelle d'un modèle d'apprentissage automatique pour l'itération.

6. Procédé selon l'une quelconque des revendications 1 à 5, dans lequel ledit un ou lesdits plusieurs composants de réplication de données comprennent un ou plusieurs composants de réseau d'accès radio et/ou un ou plusieurs composants de réseau central du système de communication radio (200).

7. Procédé selon l'une quelconque des revendications 1 à 6, dans lequel ledit un ou lesdits plusieurs composants de réplication de données comprennent une ou plusieurs stations de base et/ou une ou plusieurs fonctions de plan utilisateur (503).

8. Procédé selon l'une quelconque des revendications 1 à 7, dans lequel ledit un ou lesdits plusieurs composants de réplication de données comprennent une ou plusieurs fonctions de plan utilisateur Multicast Broadcast (503).

9. Procédé selon l'une quelconque des revendications 1 à 8, comprenant l'association du sous-ensemble déterminé à un intervalle de temps d'une séquence d'intervalles de temps, la notification audit un ou auxdits plusieurs composants de réplication de données de l'association et la notification audit un ou auxdits plusieurs composants de réplication de données du sous-ensemble déterminé en transmettant les données déterminées audit un ou auxdits plusieurs composants de réplication de données dans l'intervalle de temps.

10. Procédé selon la revendication 9, comprenant la notification audit un ou auxdits plusieurs composants de réplication de données de l'association du sous-ensemble déterminé à l'intervalle de temps sur le plan de commande.

11. Procédé selon l'une quelconque des revendications 1 à 8, comprenant l'association du sous-ensemble déterminé à une identification de sous-ensemble, la notification audit un ou auxdits plusieurs composants de réplication de données de l'association et la notification audit un ou auxdits plusieurs composants de réplication de données du sous-ensemble déterminé en transmettant l'identification de sous-ensemble audit un ou auxdits plusieurs composants de réplication de données.

12. Procédé selon la revendication 11, comprenant la notification audit un ou auxdits plusieurs composants de réplication de données de l'association du sous-ensemble déterminé à l'identification de sous-ensemble sur le plan de commande.

13. Procédé selon la revendication 11 ou 12, comprenant la notification audit un ou auxdits plusieurs composants de réplication de données du sous-ensemble déterminé en transmettant l'identification de sous-ensemble avec les données déterminées audit un ou auxdits plusieurs composants de réplication de données.

14. Système de communication radio (200) configuré pour réaliser le procédé selon l'une quelconque des revendications 1 à 13.
